# EUROPEAN PATENT SPECIFICATION

(11) **EP 3 529 175 B1**
(45) Date of publication and mention of the grant of the patent: **08.10.2025**
(21) Application number: 17861296.6
(22) Date of filing: 17.10.2017
(51) Int. Cl.: B65D 88/12, B65D 88/74, B65D 90/00, G21C 19/06, G21F 5/00, G21F 5/005

(54) **LINKED ANTENNA PAIR FOR TRANSMISSION THROUGH SHIELDED SHIPPING CONTAINER**
VERBUNDENES ANTENNENPAAR ZUR ÜBERTRAGUNG DURCH ABGESCHIRMTEN VERSANDBEHÄLTER
PAIRE D'ANTENNES RELIÉES POUR UNE TRANSMISSION À TRAVERS UN CONTENEUR D'EXPÉDITION BLINDÉ

(30) Priority: 18.10.2016 US 201662409611 P
(43) Date of publication of application: 28.08.2019
(73) Proprietor: American Aerogel Corporation, Rochester, NY 14611 (US)
(72) Inventor: KILMER, Derek, S., Pittsford, NY 14534 (US); KNEEZEL, Gary, A., Webster, NY 14580 (US)
(74) Representative: J A Kemp LLP
(86) International application number: PCT/US2017/056907
(87) International publication number: WO 2018/075470

(56) References cited:
- WO-A2-2006/074465
- US-A1- 2007 075 075
- US-A1- 2007 205 946
- US-A1- 2007 205 946
- US-A1- 2008 136 624
- US-A1- 2008 191 961
- US-A1- 2009 073 077
- US-A1- 2010 289 669
- US-A1- 2010 289 669
- US-A1- 2011 273 362
- US-A1- 2012 142 991
- US-A1- 2012 252 488
- US-A1- 2014 353 317
- US-A1- 2014 367 393

## Description

### 1. BACKGROUND

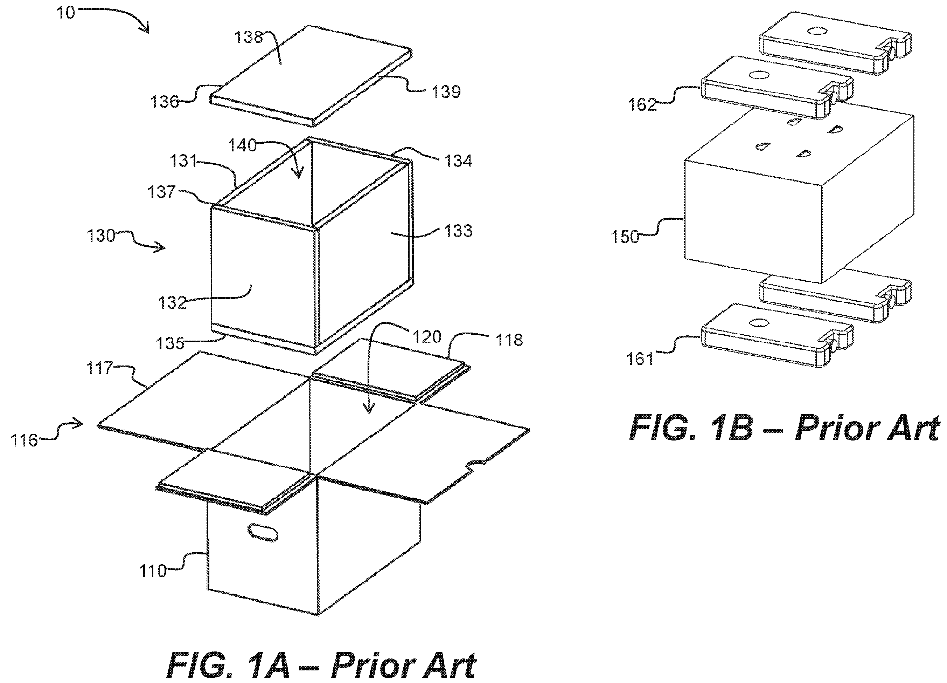

In the temperature-controlled shipping industry it is important to maintain the temperature of a payload at or near a desired temperature for an extended length of time. **FIGS. 1A** and **1B** show exploded views of elements of a prior art shipping container for temperature-controlled shipping. Insulated shipping container **10** includes an outer box **110** with a lid **116** having an open position and a closed position. Lid **116** has four hinged lid flaps **117** that extend respectively from corresponding walls. When the lid **116** is in its closed position, outer box **110** and its lid **116** define an enclosure **120** within outer box **110.** Opening lid **116** permits access to the enclosure **120.** Outer box **110** provides structural protection for the contents and is typically made of corrugated cardboard, wood, metal or plastic, for example.

A plurality of thermally insulating members is disposed within enclosure **120.** The plurality of insulating members includes an insulating body **130** and an insulating cover **136.** Thermally insulating cover **136** has an open position such that it is removed from insulating body **130** and a closed position such that it is it is in contact with insulating body **130.** When lid **116** of outer box **110** is in its closed position and insulating cover **136** is in its closed position, insulating cover **136** is proximate to lid **116.**

Insulating body **130** can be assembled from discrete vacuum insulation panels (VIP) **131-135** that are held in contact with each other as shown in **FIG. 1A****.** Vacuum insulation panel **135** forms the base of the insulating body **130** and vacuum insulation panels **131-134** form the walls, extending away from the base VIP **135.** Vacuum insulation panels are a preferred insulating material for both the insulating body **130** and the insulating cover **136** for extended duration temperature control because of their excellent thermal insulating properties.

Insulating cover **136** is also a vacuum insulation panel and can be held in contact with the top of VIP walls **131-134** of insulating body **130** when the lid **116** of outer box **110** is in its closed position. As shown in **FIG. 1A****,** lid flaps **117** at the right hand and left hand sides of outer box **110** have an attached compressible lid flap cushion **118.** In addition, a compressible bottom cushion (not shown) can be inserted into the bottom of enclosure **120.** When lid **116** is closed and sealed, the lid flap cushion **118** and the bottom cushion are compressed and provide pressure to force insulating cover **136** into contact with the top of insulating body **130.**

Each of vacuum insulation panels **131-136** has a pair of opposing faces **138** and four edges **139.** Adjacent vacuum insulation panels are held in close contact with an edge **139** of one vacuum insulation panel butted into a face **138** of an adjacent vacuum insulation panel to form a seam **137.** Optionally there can be adhesive at seam **137.** Alternatively, the adjacent vacuum insulation panels are held in contact with each other by a structure such as outer box **110.**

When insulating cover **136** is closed onto insulating body **130,** the insulating body **130** and the insulating cover **136** define a thermally insulated cavity **140** within which a payload **150 (****FIG. 1B****)** is placed. At least one temperature control material, such as lower phase change material **161** and upper phase change material **162 (****FIG. 1B****),** is placed in proximity to the payload **150** within insulated cavity **140** for maintaining the temperature of the payload **150** at a desired temperature for an extended period of time, even if the outside ambient temperature is significantly higher or lower.

Each of the vacuum insulation panels 131-136 includes a porous core material, such as an open cell foam, that is evacuated and enclosed within an envelope having low permeability to air in order to maintain the evacuated state. The envelope is made of a gas-barrier metallized plastic film. Vacuum insulation panels **131-135** in insulating body **130** and insulating cover **136** are held in close contact with each other with tight seams **137** between panels in order to provide good thermal insulation of cavity **140.** The metallized films of the vacuum insulation panels **131-136** also provide electromagnetic shielding, so that insulating body **130** and insulating cover **136** form an electromagnetically shielding assembly. In other words, cavity **140** is both thermally insulated and electromagnetically shielded.

It is desirable to remotely obtain, monitor, or read parameters that characterize conditions within cavity **140** (e.g., temperature, humidity, barometric pressure, vibration, acceleration, or strain) during shipment, without opening shipping container. However, as a result of the electromagnetic shielding of the vacuum insulation panels in the insulating body **130** and the insulating cover **136,** wireless transmission of signals from inside cavity **140** is too severely attenuated to permit remote reading of the signals. In addition, further signal attenuation can occur when shipping containers are stacked adjacent to or on top of each other.

US 2014/367393 A1 describes a thermally insulated sandwich polyurethane shipper for a temperature sensitive payload comprising an insulated body and cover both comprising vacuum insulation panels, an evacuated porous core and a gas barrier film. US2007/0205946 describes passive repeaters and their use to transfer radio frequency (RF) signals between a transmitter and receiver when a structure is located therebetween that interferes with the transmission of such signals.

### 2. SUMMARY OF THE INVENTION

The present invention provides a shipping container having a thermally insulated and electromagnetically shielded cavity for holding a payload. A linked antenna pair includes a first antenna disposed inside the cavity, a second antenna disposed outside the cavity, and a feed line electrically connecting the first antenna to the second antenna.

Advantageously, the shipping container of the invention facilitates reliable signal transmission between a wireless communication device inside the cavity and a wireless reader outside the cavity.

In addition, conditions inside the cavity can be remotely monitored from outside the shipping container without opening the shipping container.

### 3. BRIEF DESCRIPTION OF THE DRAWINGS

**FIGS. 1A** and **1B** show exploded views of a prior art shipping container;
**FIG. 2** shows a perspective view of an insulating body of a shipping container that includes a linked antenna pair according to an embodiment of the invention.
**FIG. 3** shows a perspective view of an insulating body of a shipping container that includes a linked antenna pair according to another embodiment of the invention.
**FIG. 4A** shows a top view of a linked antenna pair made by flexible printed wiring fabrication technology. **FIGS. 4B-4E** show cross-sectional views of examples of the linked antenna pair of **FIG. 4A****.**
**FIG. 5A** shows a top view of another embodiment of a linked antenna pair including a ground plane.
**FIGS. 5B** and **5C** show cross-sectional views of linked antenna pairs according to another embodiment.
**FIG. 6A** shows a quarter wave monopole antenna useful in some embodiments of the disclosure. FIG. 6B shows a coaxial cable useful in some embodiments of the invention.
**FIG. 7** shows the inside and outside of a shipping container with an associated wireless communication device inside a shielded cavity, a wireless reader outside the cavity, and portions of a linked antenna pair. It is understood that the figures are not drawn to scale. Relative sizes of elements shown in the figures are not meant to be limiting.

### 4. DETAILED DESCRIPTION

The invention includes the following:
[1] A shipping container comprising:
   a thermally insulated and electromagnetically shielded cavity for holding a payload;
   an insulating body comprising a plurality of vacuum insulation panels assembled together;
   an insulating cover comprising a vacuum insulation panel that is removably assembled onto the insulating body to define the cavity, wherein each of the vacuum insulation panels in the insulating body and the insulating cover includes an evacuated porous core and a low permeability gas-barrier metallized film;
   a linked antenna pair comprising:
      a first antenna disposed inside the cavity;
      a second antenna disposed outside the cavity; and
      a feed line electrically connecting the first antenna to the second antenna;
   a wireless communication device located within the electromagnetically shielded cavity;
   wherein the first antenna and the wireless communication device are disposed in predetermined locations within the cavity.
[2] The shipping container of the above [1], further comprising a sensor inside the cavity associated with the wireless communication device.
[3] The shipping container of the above [1], further comprising a radiation absorbing material disposed at or near the members defining the cavity.
[4] The shipping container of the above [1], wherein a pair of opposing sides of the cavity is separated by a first distance and the first antenna and the wireless communication device are separated by a second distance, the second distance being less than half of the first distance.
[5] The shipping container of the above [1], wherein the feed line passes through a seam between two adjacent vacuum insulation panels.
[6] The shipping container of the above [1], wherein the first antenna is affixed to an inner face of a first vacuum insulation panel.
[7] The shipping container of the above [6], wherein the second antenna is affixed to an outer face of the first vacuum insulation panel; or the second antenna is affixed to an outer face of a second vacuum insulation panel adjacent to the first vacuum insulation panel.

### 4.1 Definitions

Unless defined otherwise, all technical and scientific terms used herein have the same meaning as those commonly understood by one of ordinary skill in the art to which this invention belongs. Although methods and materials similar or equivalent to those described herein can be used in the practice or testing of the present invention, suitable methods and materials are described below. The materials, methods and examples are illustrative only, and are not intended to be limiting. Unless clearly indicated otherwise, the following terms as used herein have the meanings indicated below.

Throughout this specification, the word "comprise" or variations such as "comprises" or "comprising" will be understood to imply the inclusion of a stated integer or groups of integers but not the exclusion of any other integer or group of integers.

The terms "include", "includes", "including", "have", "has", and "having" will be understood as openended and non-limiting, unless specifically stated otherwise.

The term "a" or "an" may mean more than one of an item.

The term "about" means within plus or minus 10% of a stated value. For example, "about 100" would refer to any number between 90 and 110.

The term "vacuum insulation panels", abbreviated as "VIPs" is well known in the art and comprises a core material contained within a sealed enclosure, from which air has been evacuated. The core material may be made from any open cell material, including, but not limited to, polystyrene, polyurethane, fiberglass, silica and various forms of organic foams. Suitable core materials include, but are not limited to, AEROCORE (available from American Aerogel Corporation), NANOGEL (available from Nanopore), and those disclosed in U.S. patent 8,436,061, U.S. patent. 8,071,657, U.S. patent 7,521,485, U.S. patent 7,005,181, U.S. patent 6,344,240, U.S. patent 6,315,971, U.S. patent 6,090,439, and U.S. patent 5,877,100.

The invention is inclusive of combinations of the embodiments described herein. References to "a particular embodiment" and the like refer to features that are present in at least one embodiment of the invention. Separate references to "an embodiment" or "particular embodiments" or the like do not necessarily refer to the same embodiment or embodiments; however, such embodiments are not mutually exclusive, unless so indicated or as are readily apparent to one of skill in the art. The use of singular or plural in referring to the "method" or "methods" and the like is not limiting. It should be noted that, unless otherwise explicitly noted or required by context, the word "or" is used in this disclosure in a non-exclusive sense.

### 4.2 Shipping Container With A Linked Antenna Pair

In one embodiment, the present invention provides a shipping container having a thermally insulated and electromagnetically shielded cavity for holding a payload. A linked antenna pair includes a first antenna disposed inside the cavity, a second antenna disposed outside the cavity, and a feed line electrically connecting the first antenna to the second antenna.

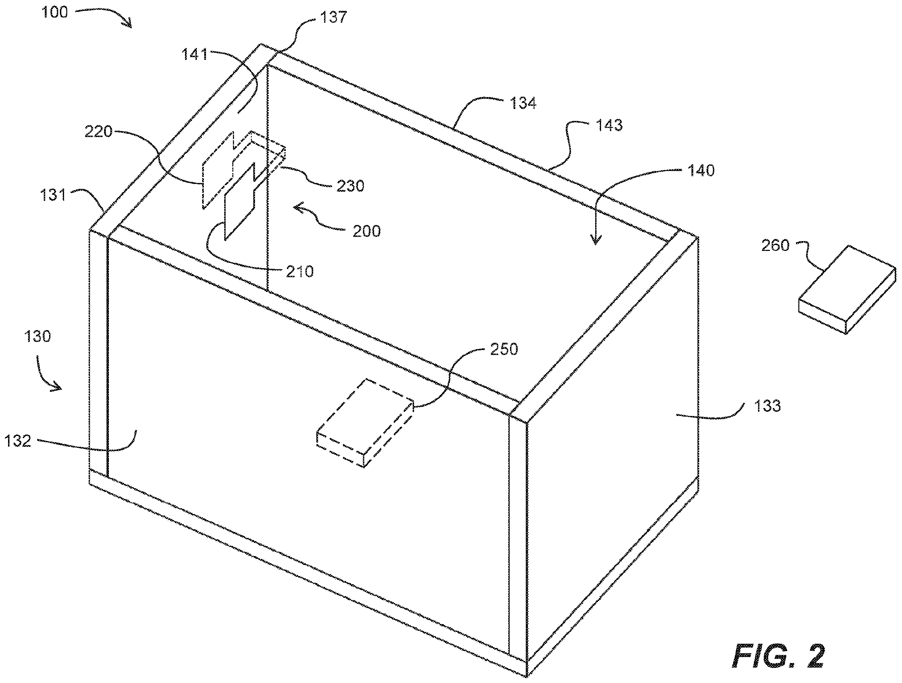

**FIG. 2** shows an embodiment that can be used to facilitate transmission of signals between the inside and the outside of the shielded cavity **140** within the insulating body **130** of a shipping container **100** (insulating cover **136** not shown). A wireless communication device **250** is placed within the insulating body **130.** Wireless communication device **250** can be a data logger, such as a temperature logger, which provides information about the temperature inside shielded cavity **140.** A linked antenna pair **200** including a first antenna **210** is disposed inside shielded cavity **140,** a second antenna **220** is disposed outside shielded cavity **140,** and a feed line **230** electrically connects first antenna **210** and second antenna **220** in hard wire fashion. Linked antenna pair **200** functions as a passive repeater for bi-directional signal transmission. Linked antenna pair is passive, meaning it does not require a power source such as a battery. First antenna **210,** located inside the shielded cavity **140,** can send signals to and receive signals from wireless communication device **250.** Similarly, second antenna **220,** located outside shielded cavity **140,** can send signals to and receive signals from a wireless reader **260** also located outside the shielded cavity **140.** Feed line **230** passes between adjacent VIPs **131** and **134** at seam **137,** wraps around edge **139** of VIP wall **131,** and transmits signals between first antenna **210** and second antenna **220.** Thus, the linked antenna pair **220** facilitates communication between wireless communication device **250** inside shielded cavity **140** and the wireless reader **260** outside shielded cavity **140.**

In the embodiment shown in **FIG. 2****,** first antenna **210** is affixed to inner face **141** of VIP wall **131,** and second antenna **220** is affixed to outer face **142** of VIP wall **131.** The first and second antenna may be affixed to the VIP walls by methods known in the art, for example, by an adhesive backing. In another embodiment, one or both of first antenna **210** and second antenna **220** are affixed to structures other than the VIP walls inside or outside the cavity **140,** respectively. In another embodiment, one or both of first antenna **210** and second antenna **220** are loosely positioned inside or outside of cavity **140.** In another embodiment, one or both of first antenna **210** and second antenna **220** extend in directions that are not parallel to the VIP walls.

Referring back to **FIG. 2****,** feed line **230,** passes through seam **137** along inner face **141,** wraps around edge **139** of VIP wall **131,** and extends along outer face **142** of VIP wall **131** to connect to second antenna **220.**

The configuration of first antenna **210** on the inner face of a VIP panel and second antenna **220** on the outer face of the same VIP panel can be used on any of the VIP panels **131-135** of insulating body **130,** as well as on the inner face and outer face of insulating cover **136.**

Location of the linked antenna pair **200** will depend on factors such as the size of the shipping container, VIP configuration, possibility of damage to the linked antennae pair, the location of wireless communication device, the location of the phase change materials, and extent of visibility of the external antenna to the reader. Placing the linked antenna pair on the insulating cover can provide a modular configuration and a wireless-enabled shipping container.

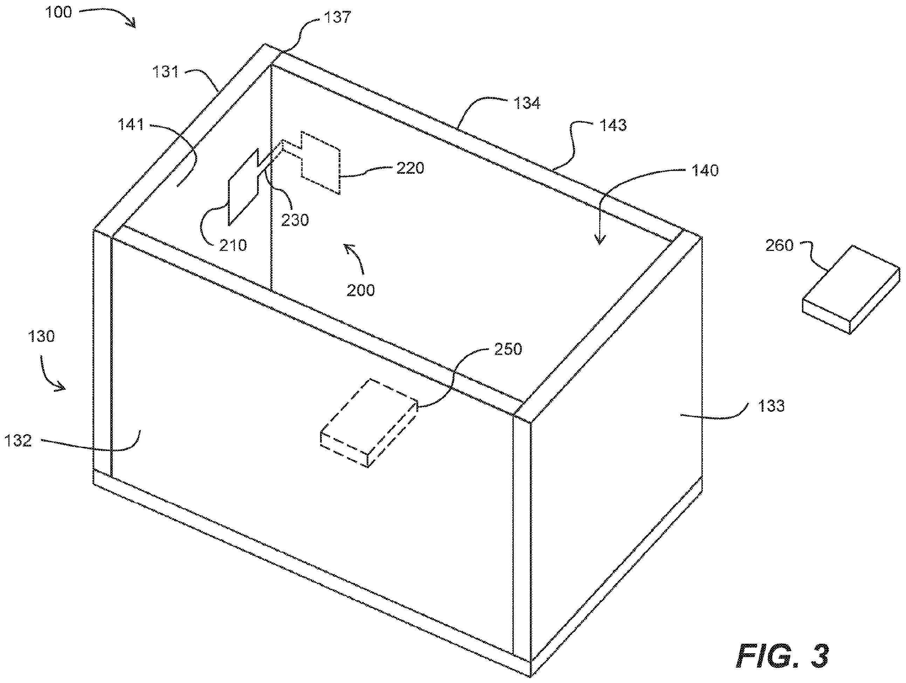

While **FIG. 2** shows the first antenna **210** and the second antenna **220** located on the inner face **141** and the outer face **142,** respectively, of the same VIP panel, the first antenna and second antenna can be located on two adjacent VIP panels. As shown in **FIG. 3****,** first antenna **210** is affixed to inner face **141** of VIP wall **131,** and second antenna **220** is affixed to outer face **143** of adjacent VIP wall **134.** Feed line **230** passes through seam **137** along inner face **141,** wraps around the corner of adjacent VIP wall **134,** and extends along outer face **143** of VIP wall **134** to connect to second antenna **220.**

The linked antenna pair can be made in layers using flexible printed wiring fabrication technology.

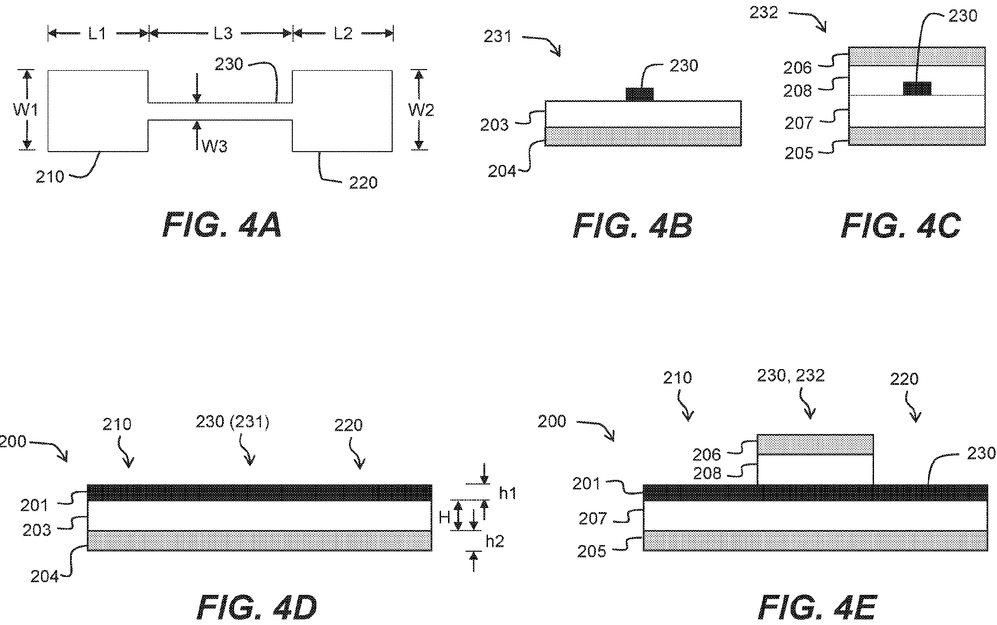

**FIG. 4A** provides a top view of linked antenna pair **200** in a flat configuration prior to placement on the VIP. Only the top metal layer of linked antenna pair **200** is shown in **FIG. 4A****.** First antenna **210** has a rectangular shape with length L1 and width W1. Second antenna **220** has a rectangular shape with length L2 and width W2. Feed line **230** has a length L3 and a width W3. Length L1 of first antenna **210** and length L2 of second antenna **220** are designed to be proportional to the wavelength of the radiated waves used by the wireless communication device **250** and the wireless reader **260.** **FIGS. 4A - 4E** show a simple rectangular antenna configuration (sometimes called a patch antenna) in which signal layer **201** is separated from a ground plane **204** by a dielectric **203.** In this configuration, it is preferred that L1 and L2 are substantially equal to a half wavelength in the dielectric **203.** The frequency used by the wireless communication device **250** and the wireless reader **260** is typically within the range of 800 MHz to 10 GHz. At 3 GHz, for example, the wavelength in air is 10 cm. The wavelength in the dielectric **203** is inversely proportional to the square root of the dielectric constant. The dielectric constant (also known as the relative permittivity) of a typical dielectric used in printed wiring is around 4 (within a range of about 2 to 5 depending upon the dielectric used), so the wavelength in such a dielectric would be about half the wavelength in air. In this example, an appropriate length for L1 and L2 would be approximately 2.5 cm. More generally, whatever their geometries, first antenna **210** and second antenna **220** are configured to operate at a frequency used by the wireless communication device **250** and wireless reader **260.** Length L3 of feed line **230** is largely determined by the distance required to pass through the seam between two adjacent vacuum insulation panels and bend around the edge to place first antenna **210** and second antenna **220** in their desired positions.

Width of a patch antenna affects input impedance and bandwidth. First antenna **210** is located within a shielded cavity and has a different environment than second antenna **220.** In some embodiments, it is advantageous for width W1 of first antenna **210** to be different from width W2 of second antenna **210.**

While **FIG. 4A** shows the first antenna having the same size and shape as that of the second antenna, in other embodiments, the first antenna and second antenna have different sizes and shapes. For example, in one embodiment, the first and second antennae can be square, circular or elliptical. In other embodiments, the first and second antenna can be any shape made using flexible printed wiring technologies, including spiral or serpentine conductive traces as radiating elements.

**FIGS. 4B** and **4C** show cross-sectional views of linked antennae pair of **FIG. 4A** along 1-1' of feed line **230.** **FIG. 4B** shows the cross-sectional view of a microstrip transmission line **231.** The microstrip transmission line **231** includes a conductor, such as feed line **230** separated from a ground plane **204** by a dielectric **203** and is readily made using flexible printed wiring technology. Typically, the first antenna **210** is associated with a first ground plane, the second antenna **220** is associated with a second ground plane and the feed line **230** is associated with a third ground plane. In the example of **FIG. 4B****,** the first ground plane, the second ground plane and the third ground plane are all formed in a single metal layer **204.**

**FIG. 4C** shows a cross-sectional view of a stripline transmission line **232.** A stripline transmission line is similar to a microstrip transmission line, but the feed line **230** is located between two ground planes **205** and **206** that are separated from feed line **230** by a pair of dielectric layers 207 and 208.

**FIGS. 4D** and **4E** show cross-sectional views of linked antennae pair of **FIG. 4A** along 2-2' of feed line **230.** **FIG. 4D** shows a cross-sectional view of microstrip transmission line **231.** Feed line **203** and radiating portions of first antenna **210** and second antenna **220** are formed in first metal signal layer **201** and can be patterned as shown in **FIG. 4A****.** Second metal layer **204** functions as a ground plane for first antenna **210,** second antenna **220** and feed line **230.** A dielectric layer **203** is disposed between the first metal signal layer **201** and the second metal layer **204.** First metal layer **201** and second metal layer **204** have heights h1 and h2 respectively. Dielectric layer **203** has a height H. **FIG. 4E** shows a cross-sectional view of stripline transmission line **232.**

Heights h1 and h2 of the first and second metal layers typically do not have a large impact on electrical performance at high frequencies, but antenna efficiency can decrease if height H between the first metal layer **201** and the second metal layer **204** is too small. Antenna efficiency is a measurement of how much energy put into the antenna gets radiated into free space rather than lost as heat on the antenna's structure or reflected back into the source. Other important antenna performance attributes include directivity, gain and bandwidth.

Directivity is the ratio of the power density in the radiation pattern maximum to the average power density at a uniform distance from the antenna. Antenna gain is the product of directivity and efficiency. Antenna bandwidth is the frequency range over which the antenna's properties are acceptable.

In other embodiments, first antenna **210** or second antenna **220** includes a plurality of antenna elements to improve antenna performance. For example, second antenna **220** can include an array of two or more antenna elements to modify directivity and bandwidth to facilitate improved reception from a wireless reader **260.** Improved reception can be important in situations in which the wireless reader is positioned in an unpredictable location and orientation relative to shipping container **100.** The two or more antenna elements in the array can have different shapes or configurations.

In addition to electrical performance of the linked antenna pair **200**, the undesired thermal effects of linked pair antenna **200** need to be considered. Excellent thermal insulation of cavity **140** requires that there be substantially no gap between the assembled vacuum insulation panels **131-135** of insulating body **130,** and between insulating body **130** and the vacuum insulation panel of insulating cover **136.** If the hard wire connection between first antenna **210** and second antenna **220** is too thick, a large gap will result, causing unacceptable heat transfer between cavity **140** and the environment will occur. This heat transfer will reduce the duration that payload temperature can be maintained within a desired range. In the example shown in **FIG. 4D****,** it is possible to have the total thickness h1 + H + h2 to be as small as about 75-100 microns (about 0.075-0.1 mm or about 0.003-0.004 inch). In other embodiments, where the various layer thicknesses are increased to improve electrical performance, such as height H of first dielectric layer **203,** total thickness h1 + H + h2 can be larger, such as about 250 microns. Similarly, if a stripline **232** transmission line is used **(****FIG. 4E****),** the total thickness in the region of feed line **230** that needs to pass through a seam **137** of adjacent vacuum insulation panels will typically be about 125 microns or greater. Adjacent vacuum insulation panels can be compressed or deformed a modest amount at the seam **137** to accommodate the passage of the feed line **230** through the seam **137** without forming a large enough gap to compromise thermal performance to an unacceptable extent.

In some embodiments, thermal conduction along the metal layers of linked antenna pair **200** from inside the cavity **140** to outside the cavity **140** needs to be considered. Width W3 of feed line **230** is typically less than both width W1 of first antenna **210** and width W2 of second antenna **220** as shown in **FIG. 4A****,** but the second metal layer **204** is fairly wide as shown in **FIG. 4B****.** Typically, the second metal layer **204** (serving as a ground plane) will be wider than the first metal signal layer **201** in corresponding regions.

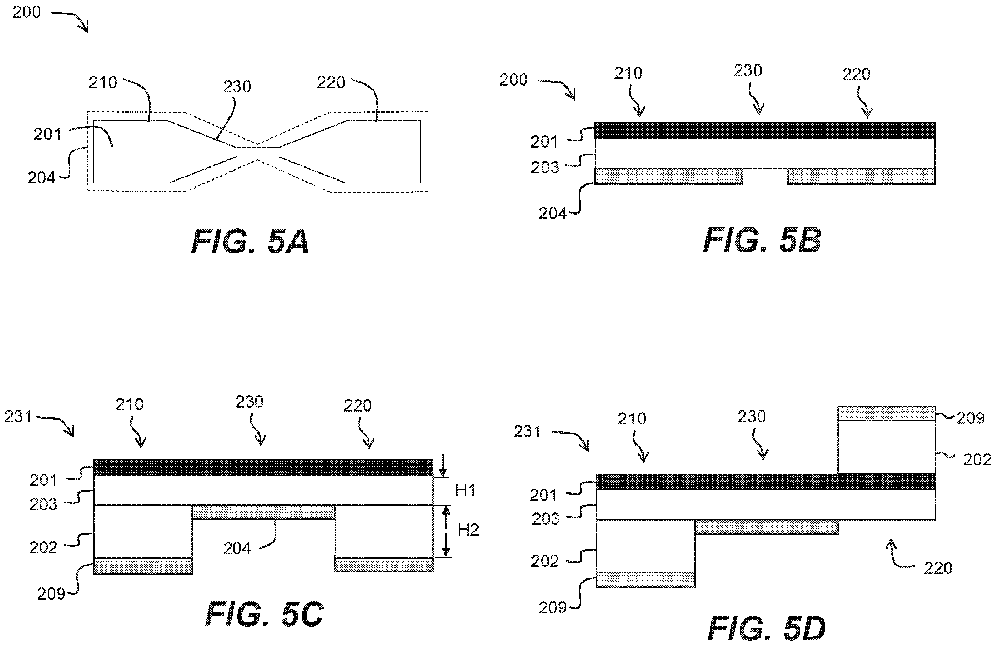

**FIG. 5A** shows a top view of a linked pair of antenna **200.** According to this embodiment, the first metal layer **201** and the second metal layer **204** have a narrower width in the region of feed line **230** than in the regions of first antenna **210** and second antenna **220.** This narrowing width provides a smaller cross-sectional area and a reduced heat conduction rate through the metal layers from inside cavity **140** to outside cavity **140.** **FIG. 5A** also shows the second metal layer **204** (ground plane) extending beyond the first metal layer **201** (signal layer) by a distance equivalent to several times the height H of the dielectric. Making the signal layer **201** smaller in area than the ground plate **204** can improve performance of the linked pair of antenna. In other words, the length and the width of the ground plane for first antenna **210** can be approximately L1 + 6H and W1 + 6H respectively, for example. **FIG. 5A** also shows an example of a gradual transition in width provided by sloped edges.

**FIG. 5B** shows a reduction of the width of second metal layer **204** by making it discontinuous in the region of feed line **230** that passes through the seam **137.** This embodiment relies on the metal layers of adjacent VIPs at the seam **137** to function as a ground plane and the plastic film of the VIPs to function as a dielectric layer. This embodiment advantageously reduces thermal conduction through the VIP seam.

As mentioned above, antenna efficiency can decrease if the height H between the first metal layer **201** and the second metal layer **204** is too small. In some embodiments, a small height H1 of dielectric is provided at the feed line **203** region for passing through the seam **137,** and a larger height H1 + H2 of dielectric can be provided at first antenna **210** and at second antenna **220,** as shown in **FIG. 5C****.** Second metal layer **204** can be patterned to extend only within the region of feed line **230.** Using rigid-flex printed wiring technology, for example, a thicker dielectric **202** (thickness H2) with a ground plane **209** can be provided at first antenna **210** and at second antenna **220.** In some embodiments, second metal layer **204** is extended to overlap with ground plane **209** to a sufficient extent that second metal layer **204** can be electrically connected to ground plane **209** by conductive vias through dielectric **203.** In some embodiments, dielectric **202** can have a different geometry at first antenna **210** than at second antenna **220.**

The configuration of linked antenna pair **200** shown in **FIG. 5C** can be used in situations in which the feed line **230** is placed in a U-shape around the edge **139** of a single vacuum insulation panel as in **FIG. 2****.** In this configuration, ground plane layer **209** of first antenna **210** faces the inner side **141** of the vacuum insulation panel, and ground plane layer **209** of second antenna **220** faces the outer side **142** of the vacuum insulation panel.

The configuration of linked antenna pair **200** shown in **FIG. 5D** can be used in situations in which the feed line **230** is placed around two adjacent vacuum insulation panels as in **FIG. 3****.** In this configuration, ground plane layer **209** of first antenna **210** faces the inner side **141** of a vacuum insulation panel, and ground plane layer **209** of second antenna **220** faces the outer side **143** of the adjacent vacuum insulation panel.

The configuration of the linked antenna pair **200** shown in **FIG. 5D** is more complicated than the configuration shown in **FIG. 5C****,** because the dielectric **202** for both antennas can be provided by a single dielectric layer for the configuration shown in **FIG. 5C****,** but not for the configuration shown in FIG. 5D (and similarly for the ground plane 209).

The configurations of linked antenna pair **200** shown in **FIG. 4D** or **FIG. 5C** can be used in the shipping container of **FIG. 3****.** In these configurations, the linked antenna pair **200** of **FIG. 4D** or **FIG. 5C** can be twisted in half in the region of feed line **203** to orient the ground planes in the correct directions.

In some embodiments, markings are printed on the linked antenna pair **200** to facilitate correct placement of the linked antenna pair **200,** i.e., so that the appropriate length is exposed on the interior and exterior sides of the insulating body **130** or insulating cover **136** for proper function of first antenna **210** and second antenna **220.**

In other embodiments, prior to placement onto the insulating body or insulating cover, the linked antenna pair can be pre-creased in the region of the feed line, to facilitate correct placement and assembly.

In the embodiments described above, the linked antenna pair is formed in planar configurations in which the antenna signal element is parallel to the ground plane.

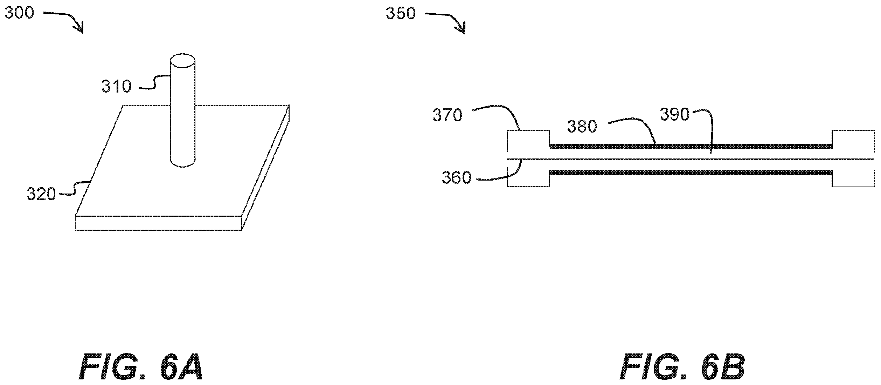

**FIG. 6A** shows a quarter-wave monopole antenna **300** in which the antenna signal element **310** has a length of one quarter wavelength of the transmission frequency of interest (for example, a length of about 2.5 cm for about 3 GHz frequency). The antenna signal element **310** is mounted perpendicular to ground plane **320** (sometimes also called a counterpoise). Quarter-wave monopole antenna can be used for either or both of first antenna **210** and second antenna **220.**

In other embodiments, a half-wave dipole antenna can be used for either or both of first antenna **210** and second antenna **220.** In these embodiments, feed wire **203** can include a single small diameter wire, such as about 0.01 inches (30 gauge) or less. Alternatively, feed wire **203** can include twin-lead cable. In other embodiments, as shown in **FIG. 6B****,** feed wire **203** can be a disconnectable coaxial cable **350** having a central signal line **360,** an outer shield **370,** a dielectric insulator **390** between the central signal line **360** and the outer shield **370,** as well as jacket insulation **380.** Coaxial cable **350** has excellent signal transmission performance, but even a small diameter format, such as micro-coax, has a cable diameter of about 1.1 mm (about 0.045 inch) which, in some application, can make the gap between adjacent vacuum insulation panels too large.

In some embodiments, a single small-diameter wire of appropriate length can be used as the linked antenna pair. The length of the wire is selected to provide a first length located inside cavity **140,** a third length for passing through the seam **137,** and a second length located outside cavity **140.** The first and second lengths are selected for best antenna performance. The metallized layer within the film of the vacuum insulation panels can provide some of the functions of ground planes and shielding.

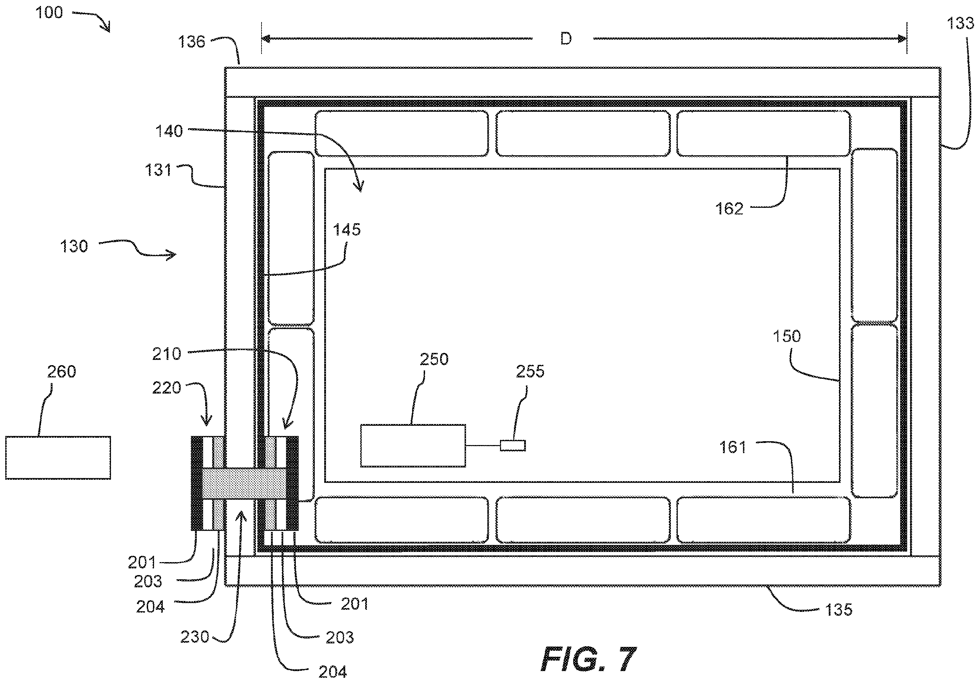

**FIG. 7** shows a portion of shipping container **100** including insulating body **130** and insulating cover **136,** but with VIP wall **132 (****FIG. 2****)** hidden from view in order to provide visibility into cavity **140.** First antenna **210** is located proximate to the inner face of VIP wall **131,** and second antenna **220** is located proximate to the outer face of VIP wall **131.** Feed wire **230** connects first antenna **210** and second antenna **220** at first metal layer **201.** First antenna **210** and second antenna **220** are shown as having the configuration of **FIG. 4D** with first metal layer **201,** second metal layer **204** and dielectric layer **203.** Second metal layers **204** (ground planes) are closest to the VIP wall **131.** First antenna **210** is located proximate to wireless communication device **250** in order to provide close coupling. If the distance between a pair of opposing sides of cavity **140,** e.g. the distance between VIP walls (such as VIP walls **131** and **133** of insulating body **130)** is D, then it is preferred that the distance between first antenna **210** and wireless communication device **250** is less than D/2. It is more preferable that the distance between first antenna **210** and wireless communication device **250** is less than D/4 or even less than D/10 in some embodiments. To define and maintain the location of wireless communication device **250,** it can be placed within a non-shielding structural cradle (not shown). By placing the wireless communication device in a cradle, the relative orientations and positions of first antenna **210** and wireless communication device **250** are predetermined, thereby facilitating reliable signal transmission.

Wireless communication device **250** can be connected to a sensor **255.** In some embodiments, sensor **255** is not a separate device but is integrated into wireless communication device **250.** In such embodiments, wireless communication device **250** is sometimes called a wireless data logger. For reading temperature within cavity **140,** sensor **255** can be a temperature sensor. If a temperature sensor is integrated into wireless communication device **250** the combined unit is sometimes called a wireless temperature logger. Sensors **255** and wireless communication device **250** can monitor and transmit signals related to temperature, humidity, barometric pressure, vibration, acceleration, strain or other physical parameters that characterize conditions within cavity **140.** Other types of signals that can be transmitted by wireless communication device **250** include location (GPS), identification (RFID) or cellular data.

To reduce reflections of signals within cavity **140,** a radiation absorbing material **145** can be provided at or near the inner faces of vacuum insulation panels, i.e., at or near the members that define cavity **140.** Spacers (not shown) can also be used to separate first antenna **210** and second antenna **220** away from the internal and external faces respectively of the vacuum insulation panels. Spacers can be integrated into the linked antenna pair **200**, or into the other elements of the shipping container **100,** such as cushioning foam or corrugate cardboard.

A plastic liner (not shown) can also be provided adjacent the faces of the vacuum insulation panels in order to provide mechanical protection for them. In some embodiments, at least a portion of the linked antenna pair can affixed to or integrated into the plastic liner.

Lower phase change material **161** and upper phase change material **162** are shown below and above payload **150** in **FIG. 7****.** In some embodiments, phase change materials can be located in additional or alternative locations, such as near VIP walls **131-134.** In some embodiments, phase change materials can include polar molecules such as water or hydrated salts or salt/water solutions. Such phase change materials can attenuate signals within cavity **140** and can influence the design of the relative location of first antenna **210** and wireless communication device **250.**

Wireless reader **260** is used to locate and communicate with the wireless communication device **250.** Wireless reader **260** can be a handheld device, a smart phone with Bluetooth or Near Field Communication, or a single (or array of), fixed antenna(s) connected to a central transceiver. In all cases, the signal attenuation caused by the VIP insulation is the main impediment to reliable communication over a reasonable distance between the wireless communication device **250** and the wireless reader **260.** Using the linked antenna pair **200** of the present disclosure, this impediment can be largely circumvented.

To conserve battery life and to meet regulatory requirements, many wireless communication devices **250** operate in a passive mode in that they do not transmit until they receive a wake-up signal from a reader. In many cases, a user will need to "sweep" a number shipping boxes with the wireless reader **260** and hope to get a response back from the wireless communication device **250** in each and every box. Establishing a wake-up condition for the wireless communication device **250** and establishing initial communication are also facilitated by stronger signal transmission enabled by the use of the linked antenna pair **200**.

Communication between the wireless communication device **250** and the wireless reader **260** can be improved by the linked antenna pair **200** in several ways including: initial recognition and connection (distance and reliability in establishing a connection between the wireless reader and the wireless communication device), read range (distance that the wireless communication device can reliably communicate with the wireless reader), and speed of data download (speed that could otherwise be degraded by weak or inconsistent signals and require data to be repeatedly resent due to errors).

## Claims

1. A shipping container **(100)** comprising:
a thermally insulated and electromagnetically shielded cavity **(140)** for holding a payload;
an insulating body **(130)** comprising a plurality of vacuum insulation panels **(131-135)** assembled together;
an insulating cover **(136)** comprising a vacuum insulation panel that is removably assembled onto the insulating body **(130)** to define the cavity **(140),** wherein each of the vacuum insulation panels **(131-135)** in the insulating body **(130)** and the insulating cover **(136)** includes an evacuated porous core and a low permeability gas-barrier metallized film;
a linked antenna pair **(220)** comprising:
a first antenna **(210)** disposed inside the cavity **(140);**
a second antenna **(220)** disposed outside the cavity **(140);** and
a feed line electrically **(230)** connecting the first antenna **(210)** to the second antenna **(220);**
a wireless communication device **(250)** located within the electromagnetically shielded cavity **(140);**
wherein the first antenna **(210)** and the wireless communication device **(250)** are disposed in predetermined locations within the cavity **(140).**

2. The shipping container of claim 1, further comprising a sensor **(255)** inside the cavity **(140)** associated with the wireless communication device **(250).**

3. The shipping container of claim 1, further comprising a radiation absorbing material **(145)** disposed at or near the members defining the cavity **(140).**

4. The shipping container of claim 1, wherein a pair of opposing sides of the cavity **(140)** is separated by a first distance and the first antenna **(210)** and the wireless communication device **(250)** are separated by a second distance, the second distance being less than half of the first distance.

5. The shipping container of claim 1, wherein the feed line **(230)** passes through a seam **(137)** between two adjacent vacuum insulation panels **(131, 134).**

6. The shipping container of claim 1, wherein the first antenna **(210)** is affixed to an inner face **(141)** of a first vacuum insulation panel **(131).**

7. The shipping container of claim 6, wherein the second antenna **(220)** is affixed to an outer face **(142)** of the first vacuum insulation panel **(131);** or the second antenna **(220)** is affixed to an outer face **(142)** of a second vacuum insulation panel **(134)** adjacent to the first vacuum insulation panel **(131).**

## Patentansprüche

1. Versandbehälter **(100),** der umfasst:
einen thermisch isolierten und elektromagnetisch abgeschirmten Hohlraum **(140)** zum Aufnehmen einer Nutzlast;
einen Isolierkörper **(130),** der eine Mehrzahl miteinander zusammengebauter Vakuumisolierplatten **(131-135)** umfasst;
eine Isolierabdeckung **(136),** die eine Vakuumisolierplatte umfasst, die abnehmbar auf den Isolierkörper **(130)** zusammengebaut wird, um den Hohlraum **(140)** zu definieren, wobei jede der Vakuumisolierplatten **(131-135)** in dem Isolierkörper **(130)** und in der Isolierabdeckung **(136)** einen evakuierten porösen Kern und eine metallisierte Gasbarrierefolie mit geringer Durchlässigkeit beinhaltet;
ein verbundenes Antennenpaar **(220),** das umfasst:
eine erste Antenne **(210),** die innerhalb des Hohlraums **(140)** angeordnet ist;
eine zweite Antenne **(220),** die außerhalb des Hohlraums **(140)** angeordnet ist; und
eine Speiseleitung **(230),** die die erste Antenne **(210)** elektrisch mit der zweiten Antenne **(220)** verbindet;
eine drahtlose Kommunikationsvorrichtung **(250),** die sich innerhalb des elektromagnetisch abgeschirmten Hohlraums **(140)** befindet;
wobei die erste Antenne **(210)** und die drahtlose Kommunikationsvorrichtung **(250)** an vorbestimmten Stellen innerhalb des Hohlraums **(140)** angeordnet sind.

2. Versandbehälter nach Anspruch 1, der ferner einen Sensor **(255)** innerhalb des Hohlraums **(140)** umfasst, der der drahtlosen Kommunikationsvorrichtung **(250)** zugeordnet ist.

3. Versandbehälter nach Anspruch 1, der ferner ein strahlungsabsorbierendes Material **(145)** umfasst, das an oder in der Nähe der Elemente angeordnet ist, die den Hohlraum **(140)** definieren.

4. Versandbehälter nach Anspruch 1, wobei ein Paar gegenüberliegender Seiten des Hohlraums **(140)** durch einen ersten Abstand getrennt ist und die erste Antenne (210) und die drahtlose Kommunikationsvorrichtung **(250)** durch einen zweiten Abstand getrennt sind, wobei der zweite Abstand weniger als die Hälfte des ersten Abstands ist.

5. Versandbehälter nach Anspruch 1, wobei die Speiseleitung **(230)** durch eine Naht (137) zwischen zwei benachbarten Vakuumisolationsplatten **(131, 134)** verläuft.

6. Versandbehälter nach Anspruch 1, wobei die erste Antenne **(210)** an einer Innenseite **(141)** einer ersten Vakuumisolationsplatte **(131)** befestigt ist.

7. Versandbehälter nach Anspruch 6, wobei die zweite Antenne **(220)** an einer äußeren Fläche **(142)** der ersten Vakuumisolationsplatte **(131)** befestigt ist; oder die zweite Antenne **(220)** an einer äußeren Fläche **(142)** einer zweiten Vakuumisolationsplatte **(134)** befestigt ist, die mit der ersten Vakuumisolationsplatte **(131)** benachbart ist.

## Revendications

1. Conteneur d'expédition (100) comprenant :
une cavité (140) à isolation thermique et à blindage électromagnétique destinée à contenir une charge utile,
un corps isolant (130) comprenant une pluralité de panneaux d'isolation sous vide (131-135) assemblés ensemble,
un couvercle isolant (136) comprenant un panneau d'isolation sous vide qui est assemblé de manière amovible sur le corps isolant (130) pour définir la cavité (140), chacun des panneaux d'isolation sous vide (131-135) du corps isolant (130) et du couvercle isolant (136) comprenant une âme poreuse sous vide et un film métallisé à faible perméabilité aux gaz,
une paire d'antennes raccordées (220) comprenant :
une première antenne (210) disposée à l'intérieur de la cavité (140),
une deuxième antenne (220) disposée à l'extérieur de la cavité (140), et
une ligne d'alimentation (230) reliant électriquement la première antenne (210) à la deuxième antenne (220),
un dispositif de communication sans fil (250) situé à l'intérieur de la cavité à blindage électromagnétique (140) ;
ladite première antenne (210) et ledit dispositif de communication sans fil (250) étant disposés à des emplacements prédéterminés à l'intérieur de la cavité (140).

2. Conteneur d'expédition selon la revendication 1, comprenant en outre un capteur (255), à l'intérieur de la cavité (140), associé au dispositif de communication sans fil (250).

3. Conteneur d'expédition selon la revendication 1, comprenant en outre un matériau absorbant le rayonnement (145) disposé au niveau ou à proximité des éléments définissant la cavité (140).

4. Conteneur d'expédition selon la revendication 1, dans lequel deux côtés opposés de la cavité (140) sont séparés d'une première distance, et la première antenne (210) et le dispositif de communication sans fil (250) sont séparés d'une deuxième distance, la deuxième distance étant inférieure à la moitié de la première distance.

5. Conteneur d'expédition selon la revendication 1, dans lequel la ligne d'alimentation (230) traverse un joint (137) entre deux panneaux d'isolation sous vide (131, 134) adjacents.

6. Conteneur d'expédition selon la revendication 1, dans lequel la première antenne (210) est fixée à une face intérieure (141) d'un premier panneau d'isolation sous vide (131).

7. Conteneur d'expédition selon la revendication 6, dans lequel la deuxième antenne (220) est fixée à une face extérieure (142) du premier panneau d'isolation sous vide (131) ou la deuxième antenne (220) est fixée à une face extérieure (142) d'un deuxième panneau d'isolation sous vide (134) adjacent au premier panneau d'isolation sous vide (131).
